# EUROPÄISCHE PATENTANMELDUNG

(11) **EP 1 640 864 A1**
(43) Veröffentlichungstag der Anmeldung: **29.03.2006**
(21) Anmeldenummer: 04022667.2
(22) Anmeldetag: 23.09.2004
(51) Int. Cl.: G06F 9/54

(54) **Verfahren zur Übergabe von Daten**

(71) Anmelder: egip Software AG, 82319 Starnberg (DE)
(72) Erfinder: Königstein, Karsten, Dr. c/o egip Software AG, 82319 Starnberg (DE)
(74) Vertreter: Hilleringmann, Jochen

(57) **Zusammenfassung**

Das Verfahren zur Übergabe von Daten, die einer von einem Anwender bedienbaren, programmgesteuerten, datenverarbeitungstechnischen ersten Anwendung zugeordnet sind, an eine von einem Anwender bedienbare, programmgesteuerte, datenverarbeitungstechnische zweite Anwendung umfasst folgende Schritte:
- Definieren von aus der ersten Anwendung zu übernehmenden Datenfeldern,
- Definieren von an die zweite Anwendung zu übergebenden Datenfeldern,
- Aufrufen der ersten Anwendung,
- Auswählen einer innerhalb der ersten Anwendung abarbeitbaren Aufgabenstellung, im Zusammenhang mit der und/oder für die die aus der ersten Anwendung oder einer dieser vorgelagerten weiteren Anwendung zu übergebenden Daten übergeben werden sollen,
- Initialisieren der Übergabe der Daten aus der ersten Anwendung,
- Zwischenspeichern dieser Daten,
- Aufrufen der zweiten Anwendung,
- Auswählen einer innerhalb der zweiten Anwendung vorgesehenen abarbeitbaren Aufgabenstellung im Zusammenhang mit der und/oder für die die zu übergebenden Daten übernommen werden sollen,
- Initialisieren der Übernahme der Daten und
- Übertragen der zwischengespeicherten Daten in die zweite Anwendung.

## Beschreibung

Die Erfindung betrifft ein Verfahren zur Übergabe von Daten, die für eine von einem Anwender bedienbare, programmgesteuerte, datenverarbeitungstechnische erste Anwendung gespeichert sind, an eine von einem Anwender bedienbare, programmgesteuerte, datenverarbeitungstechnische zweite Anwendung, wobei die beiden Anwendungen entweder jeweils auf mindestens eine Datei bzw. Datenbank zugreifen und diese Dateien/Datenbanken nicht miteinander verbunden sind oder auf eine gemeinsame Datei/Datenbank zugreifen, wobei eine Zuweisung der Daten zu der ersten Anwendung gegeben ist, nicht aber zu der zweiten Anwendung.

Bei der Abarbeitung von Prozessabläufen, beispielsweise in einem Kredit- oder Versicherungsinstitut ist häufig der Fall anzutreffen, dass die Daten, die zu einem ersten Vorgang gespeichert sind, auch zur Abarbeitung eines zweiten Vorgangs verwendet werden können. Ohne besondere Vorkehrungen ist es dann für den Sachbearbeiter erforderlich, bei der Abarbeitung des zweiten Vorgangs die an sich vorhandenen Daten nochmals zu speichern bzw. diesem zweiten Vorgang zuzuordnen. Diesbezüglich kann dadurch Abhilfe geschaffen werden, dass mit Software- und Hardware technischem Aufwand Schnittstellen zwischen Datenbanken oder Dateien zur Verfügung gestellt werden, was jedoch mit einem mitunter großem Aufwand verbunden ist.

Allgemein ausgedrückt bedeutet also die Nutzung von Daten in weiteren Applikationen bzw. Anwendungen die Übergabe dieser Daten aus einer ersten Applikation an eine zweite. Bisher erfolgt eine derartige Datenübergabe zumeist in Form von integrierten Anwendungen oder auf der Basis von Schnittstellen zwischen Dateien/Datenbanken. Derartige Systeme (beispielsweise EAI-Systeme) sind nur von der EDV beherrschbar, wodurch es bei Anpassungen oft lange dauert, bis spezielle Anforderungen umgesetzt werden können.

Der Erfindung liegt die Aufgabe zugrunde, ein Verfahren zur Übergabe von Daten, die einer von einem Anwender bedienbaren, programmgesteuerten, datenverarbeitungstechnischen ersten Anwendung zugeordnet sind, an eine von einem Anwender bedienbare, programmgesteuerte, datenverarbeitungstechnische zweite Anwendung, wobei die Voraussetzungen für die Übergabe der Daten vereinfacht sind und der Vorgang der Übergabe ebenfalls unkompliziert abläuft.

Zur Lösung dieser Aufgabe wird mit der Erfindung ein Verfahren zur Übergabe von Daten die einer von einem Anwender bedienbaren, programmgesteuerten, datenverarbeitungstechnischen ersten Anwendung zugeordnet sind, an eine von einem Anwender bedienbare, programmgesteuerte, datenverarbeitungstechnische zweite Anwendung vorgeschlagen, wobei dieses Verfahren die folgenden Schritte aufweist:
- Definieren von aus der ersten Anwendung zu übernehmenden Datenfeldern,
- Definieren von an die zweite Anwendung zu übergebenden Datenfeldern,
- Aufrufen der ersten Anwendung,
- Auswählen einer innerhalb der ersten Anwendung abarbeitbaren Aufgabenstellung, im Zusammenhang mit der und/oder für die die aus der ersten Anwendung oder einer dieser vorgelagerten weiteren Anwendung zu übergebenden Daten übergeben werden sollen,
- Initialisieren der Übergabe der Daten aus der ersten Anwendung,
- Zwischenspeichern dieser Daten,
- Aufrufen der zweiten Anwendung,
- Auswählen einer innerhalb der zweiten Anwendung vorgesehenen abarbeitbaren Aufgabenstellung im Zusammenhang mit der und/oder für die die zu übergebenden Daten übernommen werden sollen,
- Initialisieren der Übernahme der Daten und
- Übertragen der zwischengespeicherten Daten in die zweite Anwendung.

Nach der erfindungsgemäßen Lösung werden also die zu übergebenden Daten einer Anwendung "gefangen" und zwischengespeichert. Diese zwischengespeicherten Daten können dann anschließend an eine andere Anwendung übertragen werden. Damit wird eine sozusagen "nicht-invasive" Datenweitergabe sichergestellt, die einen minimalen Aufwand bei der Integration garantiert.

Bei den Daten handelt es sich insbesondere um strukturierte Daten. Diese Daten werden zwecks späteren Abrufs in beispielsweise einer Systemdatenbank abgespeichert, um von dort aus in eine andere Anwendung transferiert zu werden bzw. einer anderen Anwendung zugeordnet werden zu können.

Als Beispiel sei die Online-Anmeldung bei z.B. der GEZ genannt. Im Rahmen dieser Anmeldung werden unter anderem Adressdaten der sich anmeldenden Person abgefragt. Diese Adressdaten könnten beispielsweise für eine andere Online-Anwendung bereits gespeichert sein. Hier könnte man beispielsweise an die Anmeldung der betreffenden Person bei eBay denken. In diesem Fall geht es also um die Applikation der Erfindung unter HTML. Die HTML-Daten, die unter eBay abgespeichert sind, können nun, vom Anwender initiiert, zwischen gespeichert werden, um danach bei der Abarbeitung in die zweite Anwendung, nämlich der Anmeldung bei der GEZ kopiert zu werden.

Es ist nicht zwingend erforderlich, dass der Datentransfer für den Anwender "sichtbar" ist. Anstelle der Datenübergabe im Vordergrund kann diese also auch als "Batch" im Hintergrund ablaufen. Ferner erfolgt die Datenübergabe stets unter Nutzung der bestehenden Applikationen bzw. Businesslogiken.

Die zu übergebenden Daten müssen darüber hinaus nicht zwingend der ersten Anwendung zugeordnet bzw. unter dieser abgespeichert sein. Es ist auch denkbar, dass die zu übergebenden Daten aus einer der ersten Anwendung vorgelagerten weiteren Anwendung oder aus einer der gerade abgearbeiteten Aufgabenstellung vorgelagerten Aufgabenstellung der ersten Anwendung oder einer weiteren Anwendung stammen.

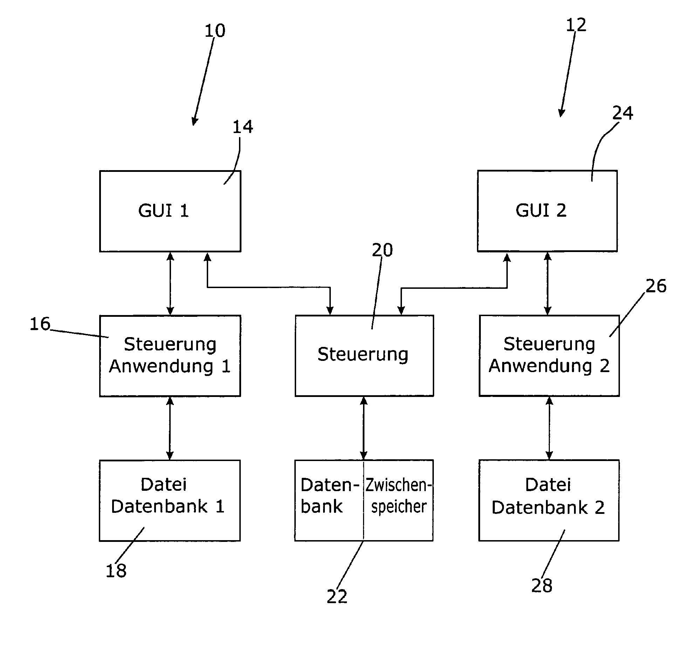

Die Erfindung wird nachfolgend anhand der Zeichnung, die schematisch die Verknüpfung einzelner Komponenten verschiedener Programme und Datenbanken zeigt, näher erläutert.

Ein Anwender möchte beispielsweise für die Ausführung einer Aufgabenstellung relevante Daten aus einer ersten Anwendung 10 in eine zweite Anwendung 12 übertragen. Hierbei werden aus unterschiedlichen Bereichen einer Anwendungsmaske der ersten Anwendung 10 Daten definiert, die zwecks Übertragung in die zweite Anwendung 12 zwischengespeichert werden sollen. Die betreffende Anwendungsmaske (graphic user interface) 14 zeigt diverse Daten an, und zwar gesteuert durch ein Programm 16, das auf eine in einer Datenbank 18 gespeicherte Datei zugreift. Beispielsweise sei angenommen, dass es sich bei den relevanten Daten um den Vor- und Zunamen, die Straße, die Postleitzahl und den Ort sowie die Email-Adresse eines bei eBay registrierten Mitglieds handelt. Nachdem die zu übergebenden Daten definiert sind, werden diese über eine Programmsteuerung 20 in einen Zwischenspeicher bzw. eine Datenbank 22 gespeichert.

Anschließend wird die zweite Anwendung 12 aufgerufen, bei der es sich beispielsweise um die Online-Anmeldung bei den örtlichen Stadtwerken, der GEZ oder anderen Institutionen handelt. Auch hierbei werden persönliche Daten der sich anmeldenden Person in einer Anwendungsmaske 24 abgefragt. Diese Anwendungsmaske 24 ist über ein Programm 26 gesteuert und arbeitet mit Dateien einer weiteren Datenbank 28 zusammen. Mit anderen Worten handelt es sich also bei den beiden Anwendungen 10 und 12 um nicht miteinander verknüpfte Applikationen, die dank des erfindungsgemäßen "Einfangens" und "Kopierens" von Daten nun für den Anwender auf extrem bequeme Art und Weise "datenmäßig" miteinander verbindbar sind.

Die Erfindung wurde vorstehend am Beispiel einer HTML-Applikation vorgestellt. Andere Applikation sind beispielsweise 3270 und dergleichen.

## Patentansprüche

1. Verfahren zur Übergabe von Daten, die einer von einem Anwender bedienbaren, programmgesteuerten, datenverarbeitungstechnischen ersten Anwendung zugeordnet sind, an eine von einem Anwender bedienbare, programmgesteuerte, datenverarbeitungstechnische zweite Anwendung, mit den folgenden Schritten:
- Definieren von aus der ersten Anwendung zu übernehmenden Datenfeldern,
- Definieren von an die zweite Anwendung zu übergebenden Datenfeldern,
- Aufrufen der ersten Anwendung,
- Auswählen einer innerhalb der ersten Anwendung abarbeitbaren Aufgabenstellung, im Zusammenhang mit der und/oder für die die aus der ersten Anwendung oder einer dieser vorgelagerten weiteren Anwendung zu übergebenden Daten übergeben werden sollen,
- Initialisieren der Übergabe der Daten aus der ersten Anwendung,
- Zwischenspeichern dieser Daten,
- Aufrufen der zweiten Anwendung,
- Auswählen einer innerhalb der zweiten Anwendung vorgesehenen abarbeitbaren Aufgabenstellung im Zusammenhang mit der und/oder für die die zu übergebenden Daten übernommen werden sollen,
- Initialisieren der Übernahme der Daten und
- Übertragen der zwischengespeicherten Daten in die zweite Anwendung.
